# FASCICULE DE BREVET EUROPEEN

(11) **EP 1 246 065 B1**
(45) Date de publication et mention de la délivrance du brevet: **08.09.2004**
(21) Numéro de dépôt: 02290059.1
(22) Date de dépôt: 10.01.2002
(51) Int. Cl.: G06F 11/14

(54) **Procédé de stockage de données informatiques et dispositif de stockage correspondant**
Verfahren zur Speicherung von Informationsdaten und übereinstimmendes Speichergerät
Information data storage method, and corresponding storage apparatus

(30) Priorité: 15.02.2001 FR 0102074
(43) Date de publication de la demande: 02.10.2002
(73) Titulaire: ALCATEL, 75008 Paris (FR)
(72) Inventeur: Playe, Patrice Roger, 78800 Houilles (FR)
(74) Mandataire: Sciaux, Edmond

(56) Documents cités:
- EP-A- 0 410 630
- EP-A- 0 566 966
- US-A- 5 584 008
- SUZUKI K ET AL: "STORAGE MANAGEMENT SOFTWARE FOR MAINFRAME AND UNIX" FUJITSU-SCIENTIFIC AND TECHNICAL JOURNAL, FUJITSU LIMITED. KAWASAKI, JP, vol. 31, no. 1, 1 juin 1995 (1995-06-01), pages 36-44, XP000524133 ISSN: 0016-2523

## Description

L'invention a pour objet un procédé de stockage des données résultant de l'exploitation d'un ensemble informatique qui sont enregistrées au niveau de moyens de stockage, ici dits principaux, de l'ensemble et qui sont sauvegardées par copie, à des fins de reprise en secours ou "back-up", dans des moyens de stockage, ici dits auxiliaires, de manière à pouvoir être recopiées en cas d'incident empêchant l'exploitation de données conservées dans les moyens de stockage principaux. Elle a aussi pour objet un dispositif de stockage permettant la mise en oeuvre de ce procédé.

La réalisation d'opérations de sauvegarde de données informatiques sur un support d'enregistrement, autre que celui ou sont initialement stockées les données, est couramment prévue pour limiter les inconvénients qui sont susceptibles de résulter de la perte de données au niveau d'un ensemble informatique, cette perte pouvant avoir des causes très diverses, telles que, par exemple, une défaillance matérielle ou logicielle, une erreur de manipulation d'un opérateur.

Un procédé connu consiste à faire réaliser périodiquement deux sauvegardes distinctes an niveau d'un ensemble informatique. Une première de ces sauvegardes périodiques se traduit par une copie complète, sur un module de support déterminé, de l'ensemble des fichiers contenant des données résultant de l'exploitation de l'ensemble informatique, pendant une période pouvant être considérée comme longue et correspondant par exemple à une ou deux semaines. La seconde de ces sauvegardes périodiques se traduit par une copie, sélective et de nature incrémentale, des fichiers contenant des données résultant de l'exploitation de l'ensemble informatique pendant une période nettement plus courte, par exemple de l'ordre de la journée. Seuls sont alors, par exemple, copiés, dans le cadre d'une copie de sauvegarde incrémentale, les fichiers créés ou modifiés depuis la copie de sauvegarde immédiatement précédente.

Le volume de données à copier dans le cadre d'une opération de copie complète et la durée de cette opération sont tels qu'ils empêchent le plus souvent qu'une telle copie puisse être fréquemment répétée, en particulier lorsque l'ensemble informatique est constitué par un parc groupant un nombre important de machines interconnectées.

Le procédé connu rappelé ci-dessus a pour inconvénient de ne pas facilement permettre de reconstituer un ensemble de données perdues à partir des données sauvegardées dans le cadre des opérations périodiques de copie qu'il préconise, dès que l'opération de reconstitution doit prendre en compte plusieurs copies et par exemple une série de copies s'étalant temporellement au-delà d'un petit nombre de semaines. Les opérations à réaliser à des fins de reconstitution deviennent alors très complexes et en conséquence elles peuvent impliquer la relecture d'un nombre relativement élevé de modules de support et s'étendre sur une durée trop longue pour permettre de répondre de manière satisfaisante aux besoins des utilisateurs au profit duquel l'ensemble informatique travaille, sachant qu'une restitution la plus rapide possible est généralement réclamée. L'intérêt d'une copie incrémentielle est en effet de rendre possible la fourniture à chaque utilisateur d'une copie d'un travail qu'il était en train de faire exécuter dans l'état où ce travail se trouvait au moment de la copie, faute de pouvoir toujours lui restituer ce travail dans l'état où celui-ci se trouvait au moment où il a pu malencontreusement être interrompu. L'objectif recherché est d'éviter à chaque utilisateur de refaire, ou de faire refaire, un travail exécuté qui a été malencontreusement interrompu et une restitution retardée perd rapidement de son intérêt, dans le cas d'un travail en cours.

Le document US-A-5 584 008 décrit une technique d'archivage de données relativement anciennes dans un dispositif de stockage de données, utilisant par ailleurs la compression de données, à des fins d'optimisation de la capacité mémoire globale dudit dispositif.

Les documents EP-A-0 410 630 ou EP-A-0 566 966 décrivent par ailleurs différents types de techiques de backup (full, incremental...).

L'invention propose donc un procédé de stockage des données traitées au cours de l'exploitation d'un ensemble informatique qui sont enregistrées, sous forme de fichiers, au niveau de moyens de stockage, ici dits principaux, de l'ensemble et qui sont sauvegardées par copie, à des fins de reprise en secours ou "back-up", dans des moyens de stockage, ici dits auxiliaires.

Selon une caractéristique de l'invention, le procédé comporte une étape de transfert périodique, à longue période, des fichiers qui sont enregistrés dans les moyens de stockage principaux de l'ensemble au fur et à mesure de l'exploitation, de la zone de stockage, ici dite primaire, où ils sont initialement enregistrés dans ces moyens principaux, vers une autre zone de stockage, ici dite secondaire, de ces mêmes moyens principaux, s'ils n'ont pas été créés et/ou modifiés au cours de la période longue immédiatement précédente, au moment périodiquement récurrent de déclenchement de transfert, de manière à séparer les fichiers récemment créés ou modifiés des autres fichiers, en vue de leur sauvegarde différenciée, se traduisant par des copies de fichiers différents avec des périodes différentes, pour les fichiers récemment créés ou modifiés et pour les autres.

Selon l'invention, les fichiers qui sont enregistrés en zone de stockage primaire sont sauvegardés, d'une part, par copie complète au niveau des moyens de stockage auxiliaire de l'ensemble avec une période intermédiaire, inférieure à la période longue, dont elle est préférablement un sous-multiple, et, d'autre part, par copie incrémentale, au niveau desdits moyens auxiliaires, avec une période réduite, inférieure à la période intermédiaire dont elle est préférablement un sous-multiple, les fichiers enregistrés en zone de stockage secondaire étant sauvegardés au niveau des moyens de stockage auxiliaires, avec ladite période longue.

Selon l'invention, le transfert périodique de fichiers de la zone de stockage primaire à la zone de stockage secondaire dans les moyens de stockage principaux est réalisé sous le contrôle du système opérationnel de l'ensemble informatique incluant ces moyens de stockage principaux, d'une manière qui est entièrement transparente pour l'utilisateur.

Selon l'invention, des pointeurs d'accès, aux fichiers conservés dans la zone de stockage secondaire des moyens de stockage principaux, sont enregistrés dans une base de données, localisée dans la zone de stockage primaire de ces moyens de stockage principaux, qui est mise à jour à l'occasion du transfert de fichiers de ladite zone de stockage primaire à ladite zone de stockage secondaire et lors de demandes de modification ou d'élimination relatives à au moins un fichier conservé en zone de stockage secondaire, chacune de ces demandes se traduisant par l'effacement du pointeur d'accès au fichier en zone de stockage secondaire, après recopie du fichier en zone de stockage primaire dans le cas d'une demande de modification.

L'invention propose aussi un dispositif de stockage pour ensemble informatique comportant des moyens de stockage de données affectés à une entité de traitement de données qui comporte au moins un processeur et qui travaille en liaison avec un système d'horloge, ces moyens incluant :
- des moyens de stockage, dits principaux, dans lesquels les données sont enregistrées, sous forme de fichiers, et avec lesquels au moins un processeur de l'entité de traitement communique à des fins de transmission et de commande, lorsque l'ensemble informatique est exploité,
- des moyens de stockage, dits auxiliaires, prévus à des fins de reprise en secours ou "backup" dans lesquels sont conservés des fichiers qui son périodiquement copiés des moyens de stockage principaux,

Selon une caractéristique de l'invention, les moyens de stockage principaux sont organisés en au moins deux zones de stockage distinctes, dont une zone, dite primaire, dans laquelle sont conservés les fichiers nouvellement créés ou modifiés, et une zone, dite secondaire, dans laquelle sont périodiquement transférés, avec une période longue déterminée, les fichiers enregistrés en zone primaire qui n'ont pas été modifiés au cours de la période longue immédiatement précédente, au moment périodiquement récurrent de déclenchement de transfert, les dites zones permettant de réaliser des sauvegardes différenciées, se traduisant par des copies de fichiers différents avec des périodicités différentes, pour les fichiers récemment créés ou modifiés et pour les autres.

L'invention, ses caractéristiques et ses avantages sont précisés dans la description qui suit en liaison avec la figure unique définie ci-dessous.

La figure unique est un schéma de principe où sont représentés les éléments d'un ensemble informatique qui sont impliqués dans la mise en oeuvre du procédé de stockage de données, selon l'invention.

Le procédé de stockage de données informatiques d'exploitation, selon l'invention est destiné à être mis en oeuvre dans le cadre d'un ensemble informatique incluant une ou une pluralité de machines de traitement, alors supposées interconnectées.

Cet ensemble informatique est schématisé ici sous la forme d'un ensemble comportant une entité de traitement 1, composée d'une ou de plusieurs unités de traitement de données comportant chacune au moins un processeur dûment programmé. Une entité 2 regroupe des moyens de stockage de données destinés à être exploités par la ou les unités de l'entité de traitement 1 et un système d'horloge 3 qui permet en particulier de régir les échanges de données entre la ou les unités de l'entité de traitement 1 et les divers moyens de stockage de données inclus dans l'entité 2.

Les divers éléments susceptibles d'être mis en oeuvre pour constituer les entités 1, 2 et le système d'horloge 3 sont bien connus de l'homme de métier et ils ne sont donc pas détaillés ici, dans la mesure où ils ne font pas directement l'objet de la présente invention.

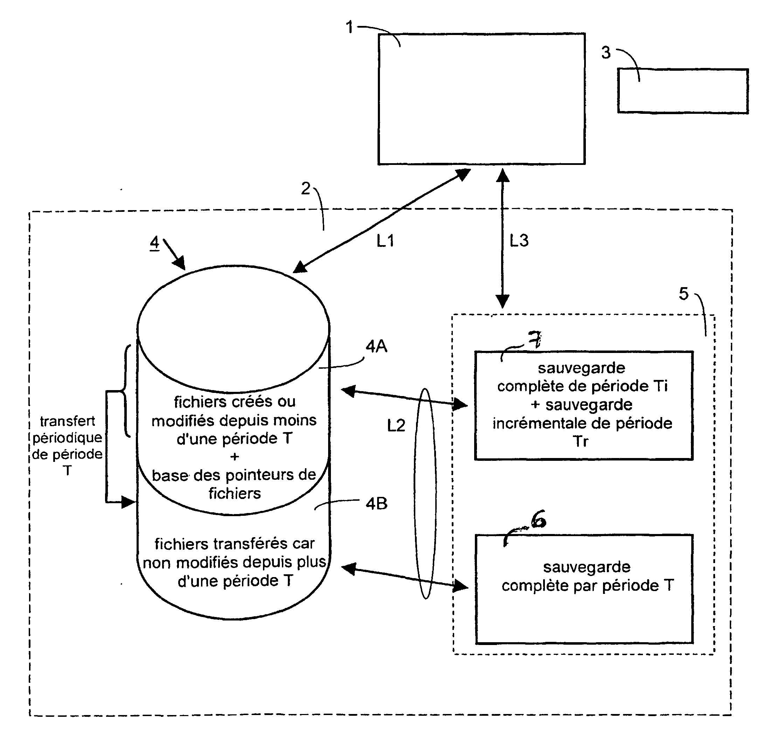

Dans le schéma de principe donné sur la figure 1, les moyens de stockage de l'entité 2, sont considérés comme composés de moyens de stockage 4, ici dits principaux, et de moyens de stockage 5, exploités à des fins de sauvegarde ou "backup" et ici dits auxiliaires.

Les moyens de stockage principaux 4 sont supposés utilisés par les unités de l'entité 1 pour stocker les données que, d'une manière générale, ces unités traitent, en phase d'exploitation de l'ensemble, le traitement pouvant notamment correspondre à une utilisation, à une transformation, à une création...

Comme il est connu, les moyens de stockage principaux 4 correspondent par exemple à un disque dur ou un ensemble de disques durs communiquant avec l'entité de traitement 1 de données dans le cadre de transferts de données réalisés par l'intermédiaire de liaisons symbolisées par une liaison L1, sur la figure 1. Comme il est également connu, de tels transferts de données entre moyens de stockage principaux 4 et unités de l'entité 1 s'effectuent, par exemple, lors du chargement d'un programme d'exploitation ou d'un fichier dans une mémoire vive d'un processeur d'unité à partir des moyens de stockage, lorsqu'un tel programme ou fichier est requis par ce processeur pour un traitement déterminé. Des transferts de données s'effectuent également en sens inverse de l'entité de traitement de données vers les moyens de stockage principaux, par exemple, dans le cadre d'un enregistrement d'un fichier de données au cours d'un traitement effectué par un processeur sur des données qui lui ont été fournies. Comme il est connu, ces données peuvent avoir été extraites des moyens de stockage principaux eux-mêmes, ou encore avoir été fournies par une interface et, par exemple, une interface de type homme-machine ou machine-machine, suite à une commande initiée par un usager ou réalisée suite à une demande d'usager.

Selon l'invention, il est prévu que les fichiers de données qui sont enregistrés dans les moyens de stockage principaux d'un ensemble, au fur et à mesure de l'exploitation de cet ensemble, soient périodiquement transférés de la zone où ils sont initialement stockés vers une autre zone de stockage, ici dite secondaire, s'ils n'ont pas été créés et/ou modifiés pendant la période de transfert T immédiatement précédente, au moment périodiquement récurrent de déclenchement de transfert.

Cette période T est choisie longue, par exemple de l'ordre de six mois ou un an. Les fichiers concernés sont transférés dans une zone de stockage secondaire 4B prévus pour eux au niveau des moyens principaux depuis la zone de stockage 4A, ici dite primaire, où ils se trouvaient jusqu'alors. Les opérations relatives à ce transfert de fichiers de zone de stockage primaire à zone de stockage secondaire à l'intérieur des moyens de stockage principaux sont préférablement réalisées sous le contrôle du système d'exploitation de l'ensemble informatique qui dispose de toutes les commandes nécessaires. Ces opérations sont donc susceptibles d'être totalement transparentes pour l'utilisateur du système.

L'accès aux fichiers stockés au niveau des moyens de stockage principaux est classiquement obtenu par l'intermédiaire de pointeurs établis au niveau de l'entité de traitement 1 pour chacun des fichiers stockés. Ces pointeurs sont regroupés dans une base de données localisée au niveau de la zone 4A des moyens principaux de stockage, ils sont créés par mise en oeuvre de programmes connus de l'homme de métier. Dans une forme préférée de réalisation où les transferts de fichiers de zone de stockage primaire à zone de stockage secondaire à l'intérieur des moyens de stockage principaux sont réalisés sous le contrôle du système d'exploitation de l'ensemble informatique, la base de pointeurs de fichiers est alors commune aux deux zones de stockage 4A et 4B. Il est alternativement envisageable de réaliser une base de pointeurs de fichiers différente pour chacune des deux zones de stockage 4A, 4B et de localiser les deux bases dans la zone de stockage 4A, en particulier si les transferts de fichiers de zone primaire 4A en zone secondaire 4B sont réalisés sous le contrôle d'un système autre que le système d'exploitation de l'ensemble informatique.

Dans la forme préférée de réalisation proposée, la base de pointeurs est mise à jour au fur et à mesure des enregistrements de nouveaux fichiers en zone de stockage primaire 4A et des modifications intervenant sur les fichiers qui y sont stockés. Une mise à jour des pointeurs, regroupés dans cette base de données, est réalisée lors du transfert de fichiers, non modifiés depuis un laps de temps supérieur à T, de zone primaire 4A en zone secondaire 4B, pour permettre à l'entité de traitement 1 de continuer à pouvoir accéder aux fichiers, après que ceux-ci aient été transférés en zone de stockage secondaire.

Lorsqu'un fichier contenu en zone secondaire 4B doit faire l'objet d'une modification, il est recopié en zone primaire 4A. Le pointeur qui permettait de l'atteindre en zone secondaire 4B, est effacé de la base de pointeurs, la copie de fichier réalisée en zone primaire 4A est modifiée comme souhaité et le pointeur permettant de l'atteindre dans cette zone 4A est conservé en mémoire dans la base de pointeurs de fichiers. Une demande d'élimination d'un fichier stocké en zone secondaire 4B se traduit par un effacement du pointeur qui permettait de l'atteindre et qui était jusqu'alors conservé dans la base de pointeurs de fichiers.

Les moyens de stockage auxiliaires 5, destinés à être exploités aux fins de sauvegarde, sont organisés pour coopérer avec les moyens de stockage principaux 4, dans des conditions déterminées. Ils exploitent couramment un appareillage d'enregistrement/lecture fonctionnant avec des supports d'enregistrement amovibles, et interchangeables qui sont réalisés sous forme modulaire, tels des bandes magnétiques ou des disques.

Comme indiqué plus haut, les transferts de données entre moyens de stockage principaux et auxiliaires sont supposés régis par au moins une unité de l'entité de traitement 1, en liaison avec le système d'horloge 3, ou éventuellement en coopération par plusieurs unités de cette entité de traitement en liaison avec ce système d'horloge. A cet effet, des échanges sont prévus entre les moyens de stockage principaux 4, les moyens de stockage auxiliaires 5 et l'entité de traitement qui est chargée d'en assurer la régie. Ils se réalisent via un ensemble de moyens de transmission qui est symbolisé par les liaisons de transmission L1, L2, L3, sur la figure 1. Les liaisons L1, L2, L3, les moyens de stockage principaux 4 et les moyens auxiliaires 5 ne seront pas détaillés ici dans la mesure où leurs natures respectives n'ont qu'un rapport indirect avec l'objet de la présente invention.

Le procédé de stockage de données informatiques, selon l'invention, est plus particulièrement destiné à être appliqué aux diverses données qui sont créées et/ou modifiées dans un ensemble informatique, lorsqu'il est en fonctionnement. En effet, ces données risquent d'être définitivement perdues en cas d'incident intervenant avant qu'elles n'aient été sauvegardées d'une manière qui permette, avec certitude, de les retrouver. Comme il est connu, ces données informatiques comprennent notamment des données d'exploitation que l'ensemble informatique produit ou modifie dans le cadre des traitements d'application qu'il exécute et des données d'indexation, en particulier des pointeurs . Ces derniers sont notamment créés pour permettre de tracer et donc de retrouver, après enregistrement, les données créées ou modifiées, en phase d'exploitation.

Le procédé de stockage selon l'invention permet diverses opérations périodiques de sauvegarde concernant les fichiers qui sont conservés au niveau des moyens de stockage principaux.

Une première opération de sauvegarde complète est périodiquement réalisée pour les fichiers qui sont contenus dans la zone secondaire 4B des moyens de stockage principaux. Elle s'effectue préférablement après un transfert périodique de fichiers non modifiés de la zone de stockage primaire initiale à la zone de stockage secondaire. Elle consiste à recopier le contenu de la zone de stockage secondaire 4B, tel qu'existant au moment de la sauvegarde, au niveau des moyens de stockage auxiliaire 5. Ce contenu est supposé copié sur un support d'enregistrement 6, au niveau des moyens auxiliaires 5, ce support étant couramment amovible et modulaire, comme déjà indiqué plus haut. La période de cette première opération de sauvegarde complète correspond, par exemple, à la période longue de transfert T définie plus haut, une première opération de sauvegarde complète étant alors réalisée après chaque transfert entre zones 4A et 4B des moyens de stockage principaux.

Une seconde opération de sauvegarde complète est périodiquement réalisée pour le contenu de la zone de stockage primaire 4A des moyens de stockage principaux 4. Elle est répétée avec une période, ici dite intermédiaire Ti, notablement inférieure à la période T, dont Ti est, par exemple, un sous-multiple. Cette période intermédiaire est par exemple de l'ordre de la quinzaine de jours, si la période T est de six mois. Elle consiste à copier le contenu de la zone de stockage primaire 4A, tel qu'existant au moment de la sauvegarde, au niveau des moyens de stockage auxiliaire 5. Ce stockage s'effectue, par exemple, sur un support d'enregistrement 7 qui peut être de même type qu'un support d'enregistrement 6.

La mise en oeuvre de deux opérations distinctes de sauvegarde complète concernant, d'une part, les fichiers qui n'ont pas été modifiés pendant un temps relativement long et, d'autre part, les fichiers plus récemment modifiés, avec une période plus courte, permet de limiter le volume des transferts de données réalisés entre moyens de stockage principaux et moyens de stockage auxiliaires. La durée de ces transferts est diminuée, elle aussi, du fait de l'élimination de transferts répétitifs et superflus de fichiers non modifiés. Ceci conduit aussi à une réduction des besoins en matière de stockage au niveau des supports d'enregistrement.

Une opération de sauvegarde incrémentale est périodiquement réalisée au niveau de la zone de stockage primaire 4A des moyens de stockage principaux. Elle est répétée avec une période réduite Tr préférablement très inférieure à une période intermédiaire, dont elle est par exemple un sous-multiple, cette période réduite Tr étant pas exemple d'un jour, lorsque la période intermédiaire Ti est de l'ordre de la quinzaine de jours. L'opération de sauvegarde incrémentale consiste à copier au niveau des moyens auxiliaires 5, les fichiers enregistrés dans la zone de stockage primaire 4A qui ont créés ou modifiés depuis la dernière sauvegarde. L'ensemble formé par ces fichiers est, par exemple, stocké au niveau des moyens de stockage auxiliaire, sur un support d'enregistrement 7.

L'association de sauvegardes complètes et de sauvegardes incrémentales réalisées à partir de la zone de stockage primaire des moyens de stockage principaux permet, elle aussi, de limiter le volume des transferts de données réalisés entre moyens de stockage principaux et moyens de stockage auxiliaires et la durée de ces transferts pour les mêmes raisons que précédemment. Elle permet donc de réduire, dans de grandes proportions, les besoins en matière de stockage au niveau des supports d'enregistrement 7.

Le choix d'une courte période Tr pour le déclenchement des sauvegardes incrémentales permet, d'une part, de limiter les volumes de données à transférer et les temps nécessaires à la réalisation des opérations de copie incrémentales et, d'autre part de réduire la taille du volume de données concerné, en cas de perte occasionnée par un incident en phase de transfert.

Comme connu, les sauvegardes réalisées au niveau des moyens de stockage auxiliaires 5 sont prévues pour permettre de reconstituer le plus exactement possible le contenu des moyens de stockage principaux 4, en cas de besoin, soit généralement suite à une erreur ou à un incident.

Une telle reconstitution implique que la base de données de pointeurs stockée dans la zone de stockage primaire 4A des moyens de stockage principaux soit en état d'être exploitée, si elle ne l'est pas il est alors nécessaire d'utiliser ce qui a été sauvegardé, par envoi aux moyens de stockage auxiliaires, pour la rétablir.

Le rétablissement de la base de données de pointeurs en zone primaire 4A est ici supposé s'effectuer par recopie à partir de la dernière sauvegarde réalisée sur un support d'enregistrement 7, cette sauvegarde pouvant être soit une sauvegarde incrémentale, soit, le cas échéant, une sauvegarde complète, ordinairement de période Tr.

Le recours aux sauvegardes réalisées peut être nécessité par une tentative de récupération d'un ou de plusieurs fichiers qui ne se trouvent plus stockés au niveau des moyens de stockage principaux où ils devraient être. Il est alors fait appel à la base de données de pointeurs sauvegardée pour obtenir la localisation de chacun de ces fichiers au niveau des moyens de stockage auxiliaire, de manière à pouvoir les recopier en zone de stockage primaire 4A ou secondaire 4B où ils auraient du se trouver, à partir du support d'enregistrement 6 ou 7 ayant servi à leur sauvegarde.

Il peut être nécessaire de reconstituer le plus fidèlement possible l'ensemble des fichiers préalablement localisés au niveau des moyens de stockage principaux, après un incident impliquant une telle reconstitution. Il est alors classiquement réalisé une série de recopies, à partir des moyens de stockage auxiliaires, au niveau des moyens de stockage principaux. Cette série inclut une recopie de la dernière sauvegarde complète du contenu de la zone de stockage secondaire 4B réalisée au niveau d'un support d'enregistrement 6, préalablement à l'incident. Elle est complétée par une recopie de la dernière sauvegarde complète du contenu de la zone de stockage primaire 4A qui a été réalisée au niveau d'un support d'enregistrement 7, avant l'incident considéré ci-dessus, et par la recopie des éventuelles sauvegardes incrémentales réalisées à la suite de la dernière sauvegarde complète de zone 4A.

Une reconstitution réalisée, au niveau des moyens de stockage principaux à partir des fichiers sauvegardés au niveau des moyens de stockage auxiliaire, à partir de la plus récente base de pointeurs de fichiers sauvegardée dans ces moyens de stockage auxiliaires, permet de reproduire à l'identique et de rendre à nouveau disponible l'ensemble des fichiers qui étaient accessibles par l'intermédiaire des pointeurs de cette base de pointeurs de fichiers.

## Revendications

1. Procédé de stockage des données traitées au cours de l'exploitation d'un ensemble informatique qui sont enregistrées, sous forme de fichiers, au niveau de moyens de stockage (4), ici dits principaux, de l'ensemble et qui sont sauvegardées par copie, à des fins de reprise en secours ou "back-up", dans des moyens de stockage (5), ici dits auxiliaires, **caractérisé en ce qu'**il comporte une étape de transfert périodique, à longue période (T), des fichiers qui sont enregistrés dans les moyens de stockage principaux de l'ensemble au fur et à mesure de l'exploitation, de la zone de stockage (4A), ici dite primaire, où ils sont initialement enregistrés dans ces moyens principaux, vers une autre zone de stockage (4B), ici dite secondaire, de ces moyens principaux, s'ils n'ont pas été créés et/ou modifiés au cours de la période longue immédiatement précédente, au moment, périodiquement récurrent de déclenchement de transfert, de manière à séparer les fichiers récemment créés ou modifiés des autres fichiers à des fins de sauvegarde différenciée, se traduisant par des copies de fichiers différents avec des périodes différentes, pour les fichiers récemment créés ou modifiés et pour les autres.

2. Procédé de stockage, selon la revendication 1, dans lequel les fichiers qui sont enregistrés en zone de stockage primaire sont sauvegardés, d'une part, par copie complète au niveau des moyens de stockage auxiliaire de l'ensemble avec une période intermédiaire Ti, inférieure à la période longue T, dont elle est préférablement un sous-multiple, et, d'autre part, par copie incrémentale, au niveau desdits moyens auxiliaires, avec une période réduite Tr, inférieure à la période intermédiaire dont elle est préférablement un sous-multiple, les fichiers enregistrés en zone de stockage secondaire étant sauvegardés au niveau des moyens de stockage auxiliaires, avec ladite période longue T.

3. Procédé de stockage, selon la revendications 1, dans lequel le transfert périodique de fichiers de la zone de stockage primaire à la zone de stockage secondaire dans les moyens de stockage principaux est réalisé sous le contrôle du système opérationnel de l'ensemble informatique incluant ces moyens de stockage principaux, d'une manière qui est entièrement transparente pour l'utilisateur.

4. Procédé de stockage, selon la revendications 2, dans lequel le transfert périodique de fichiers de la zone de stockage primaire à la zone de stockage secondaire dans les moyens de stockage principaux est réalisé sous le contrôle du système opérationnel de l'ensemble informatique incluant ces moyens de stockage principaux, d'une manière qui est entièrement transparente pour l'utilisateur.

5. Procédé de stockage, selon l'une des revendications 1 à 4, dans lequel des pointeurs d'accès, aux fichiers conservés dans la zone de stockage secondaire (4B) des moyens de stockage principaux, sont enregistrés dans une base de données, localisée dans la zone de stockage primaire (4A) de ces moyens de stockage principaux, qui est mise à jour à l'occasion du transfert de fichiers de ladite zone de stockage primaire à ladite zone de stockage secondaire et lors de demandes de modification ou d'élimination relatives à au moins un fichier conservé en zone de stockage secondaire, chacune de ces demandes se traduisant par l'effacement du pointeur d'accès au fichier en zone de stockage secondaire, après recopie du fichier en zone de stockage primaire dans le cas d'une demande de modification.

6. Dispositif de stockage de données pour ensemble informatique comportant des moyens de stockage de données affectés à une entité de traitement de données (1) qui comporte au moins un processeur et qui travaille en liaison avec un système d'horloge (3), ces moyens incluant :
- des moyens de stockage (4), dits principaux, dans lesquels les données sont enregistrées, sous forme de fichiers, et avec lesquels au moins un processeur de l'entité de traitement communique à des fins de transmission et de commande, lorsque l'ensemble informatique est exploité,
- des moyens de stockage (5), dits auxiliaires, prévus à des fins de reprise en secours ou "backup" dans lesquels sont conservés des fichiers qui son périodiquement copiés des moyens de stockage principaux,
**caractérisé en ce que** les moyens de stockage principaux sont organisés en au moins deux zones de stockage distinctes, dont une zone (4A), dite primaire, dans laquelle sont conservés les fichiers nouvellement créés et/ou modifiés, et une zone (4B), dite secondaire, dans laquelle sont périodiquement transférés, avec une période longue (T) déterminée, les fichiers enregistrés en zone primaire qui n'ont pas été créés et/ou modifiés au cours de la période longue immédiatement précédente, au moment périodiquement récurrent de déclenchement de transfert, les dites zones permettant de réaliser des sauvegardes différenciées, se traduisant par des copies de fichiers différents avec des périodicités différentes, pour les fichiers récemment créés ou modifiés et pour les autres.

## Patentansprüche

1. Verfahren zum Speichern von im Betrieb einer Datenverarbeitungsanlage verarbeiteten Daten, die in Form von Dateien auf der Ebene von hier als Hauptspeichervorrichtungen bezeichneten Speichervorrichtungen (4) der Anlage registriert und mit dem Ziel einer Wiederherstellung oder eines "Backups" durch Kopie in hier als Hilfsspeichervorrichtungen bezeichnete Speichervorrichtungen (5) gesichert werden, **dadurch gekennzeichnet, daß** es einen Schritt zum regelmäßig und in langen Intervallen (T) vorgenommenen Transfer von Dateien, die in den Hauptspeichervorrichtungen der Anlage je nach Art des Betriebs registriert sind, von der hier als primäre Speicherzone bezeichneten Speicherzone (4A), wo sie anfänglich in diesen Hauptspeichervorrichtungen registriert sind, in eine andere, hier als sekundäre Speicherzone bezeichnete Speicherzone (4B) dieser Hauptspeichervorrichtungen beinhaltet, wenn sie nicht im Laufe des unmittelbar vorangegangenen langen Intervalls zu dem regelmäßig wiederkehrenden Zeitpunkt der Transferauslösung erstellt und/oder modifiziert wurden, so daß die erst kürzlich erstellten und/oder modifizierten Dateien von anderen Dateien zum Zweck ihrer differenzierten Sicherung voneinander getrennt werden, was durch Kopien von unterschiedlichen Dateien mit unterschiedlichen Intervallen für die erst kürzlich erstellten oder modifizierten Dateien und für die anderen Dateien zum Ausdruck kommt.

2. Speicherverfahren gemäß Anspruch 1, in welchem die Dateien, die in der primären Speicherzone registriert sind, einerseits durch vollständige Kopie auf der Ebene der Hilfsspeichervorrichtungen der Anlage mit einem mittleren Intervall Ti gesichert werden, das kürzer als das lange Intervall T und vorzugsweise ein Bruchteil von diesem ist, und andererseits durch inkrementale Kopie auf der Ebene der besagten Hilfsspeichervorrichtungen mit einem kürzeren Intervall Tr gesichert werden, das kürzer als das lange Intervall und vorzugsweise ein Bruchteil von diesem ist, wobei die in der sekundären Speicherzone registrierten Dateien auf der Ebene der Hilfsspeichervorrichtungen mit dem besagten langen Intervall T gesichert werden.

3. Speicherverfahren gemäß Anspruch 1, in welchem der regelmäßige Transfer von Dateien von der primären Speicherzone zur sekundären Speicherzone in den Hauptspeichervorrichtungen auf eine für den Benutzer vollkommen transparente Weise unter der Steuerung des Betriebssystems der Datenverarbeitungsanlage bewerkstelligt.wird, zu dem diese Hauptspeichervorrichtungen gehören.

4. Speicherverfahren gemäß Anspruch 2, in welchem der regelmäßige Transfer von Dateien von der primären Speicherzone zur sekundären Speicherzone in den Hauptspeichervorrichtungen auf eine für den Benutzer vollkommen transparente Weise unter der Steuerung des Betriebssystems der Datenverarbeitungsanlage bewerkstelligt wird, zu dem diese Hauptspeichervorrichtungen gehören.

5. Speicherverfahren gemäß einem oder mehreren der Ansprüche 1 bis 4, in welchem Zugriffszeiger zu den in der sekundären Speicherzone (4B) der Hauptspeichervorrichtungen gespeicherten Dateien in einer Datenbank registriert werden, die sich in der primären Speicherzone (4A) dieser Hauptspeichervorrichtungen befindet und beim Transfer von Dateien aus der besagten primären Speicherzone in die besagte sekundäre Speicherzone sowie bei Modifikations- oder Eliminierungsanforderungen bezüglich mindestens einer in der sekundären Speicherzone gespeicherten Datei aktualisiert wird, wobei im Fall einer Modifikationsanforderung jede dieser Anforderungen nach dem Zurückkopieren der Datei in die primäre Speicherzone die Löschung des Zugriffszeigers zu der Datei in der sekundären Speicherzone bewirkt.

6. Vorrichtung zur Speicherung von Daten für eine Datenverarbeitungsanlage, beinhaltend Datenspeicherungsvorrichtungen, die als Datenverarbeitungssystem (1) eingesetzt werden, welches mindestens einen Prozessor beinhaltet und in Verbindung mit einem Taktgebersystem (3) arbeitet, wobei diese Vorrichtungen folgendes beinhalten:
- Speichervorrichtungen (4), die als Hauptspeichervorrichtungen bezeichnet werden, in welchen die Daten in Form von Dateien registriert werden und mit welchen mindestens ein Prozessor des Verarbeitungssystems zum Zweck der Übertragung und Steuerung kommuniziert, wenn die Datenverarbeitungsanlage benutzt wird,
- Speichervorrichtungen (5), die als Hilfsspeichervorrichtungen bezeichnet werden, die zum Wiederherstellen oder "Backup" vorgesehen sind und in denen Dateien gesichert werden, die regelmäßig von den Hauptspeichervorrichtungen kopiert werden,
**dadurch gekennzeichnet, daß** die Hauptspeichervorrichtungen in mindestens zwei getrennten Speicherzonen organisiert sind, darunter eine Zone (4A), die als Primärzone bezeichnet wird, in der die neu erstellten oder modifizierten Dateien gesichert werden, sowie eine Zone (4B), die als Sekundärzone bezeichnet wird, in welche in langen, festgelegten Intervallen (T) regelmäßig diejenigen in der Primärzone registrierten Dateien übertragen werden, die im Verlauf des unmittelbar vorangegangenen langen Intervalls zum regelmäßig wiederkehrenden Zeitpunkt der Auslösung des Transfers nicht erstellt und/oder modifiziert wurden, wobei es die besagten Zonen gestatten, differenzierte Sicherungen zu bewerkstelligen, was sich für die kürzlich erstellten oder modifizierten Dateien und für die anderen Dateien in unterschiedlichen Dateikopien mit unterschiedlichen Periodizitäten äußert.

## Claims

1. A method of storing data processed during the operation of a data processing system, stored in the form of files in main storage means (4) of said system and backed up by copying it to auxiliary storage means (5), **characterised in that** it comprises a periodic transfer stage, at transfer initiation times periodically recurring with a long period (T), transferring files stored in said main storage means of said system when it is operating from said primary storage area (4A) in which they are initially stored in said main storage means to a secondary storage area (4B) of said main storage means if they were not created and/or modified during the immediately preceding long period, in order to separate files recently created or modified from other files, to enable differentiated back-ups of files recently created or modified and other files, producing copies of different files at different periods.

2. A storage method according to claim 1 wherein said files stored in said primary storage area are backed up, firstly, by complete copying to said auxiliary storage means of said system at an intermediate period Ti less than the long period T, of which it is preferably a submultiple, and, secondly, by incremental copying to said auxiliary means at a short period Tr less than the intermediate period, of which it is preferably a submultiple, files stored in said secondary storage area being backed up to said auxiliary storage means with said long period T.

3. A storage method according to claim 1 wherein files are periodically transferred from said primary storage area to said secondary storage area in said main storage means under the control of the operating system of said data processing system including said main storage means and in a manner that is entirely transparent to a user.

4. A storage method according to claim 2 wherein files are periodically transferred from said primary storage area to said secondary storage area in said main storage means under the control of the operating system of said data processing system including said main storage means and in a manner that is entirely transparent for a user.

5. A storage method according to any of claims 1 to 4, wherein access pointers to files stored in said secondary storage area (4B) of said main storage means are stored in a database located in the primary storage area (4A) of said main storage means that is updated on transferring files from said primary storage area to said secondary storage area and in the event of requests to modify or eliminate at least one file stored in said secondary storage area, each request leading to the deletion of the pointer for accessing said file in said secondary storage area after copying said file into said primary storage area in the case of a request for modification.

6. A data storage device for a data processing system including storage means for storing data assigned to a data processor entity (1) that includes at least one processor and operates in conjunction with a clock system (3), said means including:
- main storage means (4) in which said data is stored in the form of files and with which at least one processor of said processing entity communicates for transmission and command purposes when said data processing system is operating, and
- auxiliary storage means for back-up, for storing files periodically copied from said main storage means,
**characterised in that** said main storage means are organised into at least two separate storage areas, including a primary area (4A) for storing files newly created and/or modified and a secondary area (4B) into which are periodically transferred, at a transfer initiating time recurring periodically with a specified long period (T), files stored in said primary area that have not been created and/or modified during the immediately preceding long period, said areas providing for differentiated back-ups of files recently created or modified and other files, producing copies of different files at different periods.
